# EUROPEAN PATENT SPECIFICATION

(11) **EP 2 796 679 B1**
(45) Date of publication and mention of the grant of the patent: **10.05.2017**
(21) Application number: 14382108.0
(22) Date of filing: 27.03.2014
(51) Int. Cl.: F01M 13/00, F16L 59/153, F02M 25/06, B29C 39/10, B29C 67/24, F01M 13/04, B29C 44/12

(54) **Gas recirculation pipe of a combustion engine and method for manufacturing said pipe**
Abgasrückführungsrohr einer Brennkraftmaschine und Verfahren zur Herstellung dieses Rohres
Tuyau de recirculation de gaz d'un moteur à combustion interne et procédé de fabrication de ce tuyau

(30) Priority: 25.04.2013 ES 201330606
(43) Date of publication of application: 29.10.2014
(73) Proprietor: Cikautxo, S. Coop., 48710 Berriatua (Vizcaya) (ES)
(72) Inventor: Azpiazu Echave, Iñaki, 48270 MARKINA - XEMEIN (ES)
(74) Representative: Igartua, Ismael

(56) References cited:
- EP-A2- 1 870 629
- WO-A1-2006/002798
- CN-U- 202 544 961
- CN-U- 202 901 701
- GB-A- 2 407 319
- US-A- 3 876 355
- US-A1- 2002 070 475
- US-B1- 6 173 701

## Description

### TECHNICAL FIELD

The present invention relates to gas recirculation pipes of combustion engines and methods for manufacturing such pipes.

### PRIOR ART

Gas recirculation pipes of combustion engines, also known as blow-by recirculation pipes, which take unburned fuel vapors and/or oil vapors to the intake system of the engine again so that they can be burned again are known.

It is also known to equip such gas recirculation pipes with additional heating systems, such as arranging said gas recirculation pipes close to the water cooling system of the vehicle such that the exchanged heat is directed towards said pipes, or to install electric heaters on said pipes to prevent the gas circulating in said pipes from freezing when said pipes are subjected to low temperatures.

In this sense, US20110146638 A1 discloses a gas recirculation system comprising a conduit that carries part of the blow-by gas again towards the intake system of the combustion engine. Said conduit comprises an outer surface. Said conduit receives the heat dissipated by the exhaust manifold, which acts like a heat source, to heat said conduit and thus prevent the gas circulating in said conduit from freezing.

US3876355 A discloses a method for insulating a pipe with a foamed material, such as polyurethane. To carry on said method US3876355 A discloses an apparatus for forming a mold about the pipe into which the foam may be injected. The pipe to be insulated is feed continuously drived by rollers. Foaming agents for polyurethane foam may be pre-mixed and injected from a nozzle. The soft foamed pipe continuos travelling along rollers until it is sufficiently relatively rigid.

CN202901701 U discloses a ventilation pipe comprising a conduit having a joint in one end and a valve in the other end. The conduit is isolated by covering the outer surface of the conduit with polyurethane.

### DISCLOSURE OF THE INVENTION

One object of the invention is to provide a gas recirculation pipe of a combustion engine, as described below.

The gas recirculation pipe of the invention comprises a conduit that is suitable for said gas to circulate therein and that comprises at each end a connector where one of the connector comprises a sensor to aid in controlling the gas circulating in the pipe. Said conduit comprises an outer surface that is at least partially covered by an insulating material to thermally insulate said pipe. Said insulating material is overmolded on said conduit.

Another object of the invention is to provide a method for manufacturing said recirculation pipe, as described below.

The method of the invention comprises an initial step in which the conduit together with the connectors and the sensor is introduced in a mold cavity, a mixing step in which a base and a reagent are mixed, a filling step in which said mixture is taken to the mold cavity, and a curing and extraction step in which the pipe is extracted from the mold cavity after the curing time.

Gas recirculation pipes in cars are usually arranged between other conduits and components which limit the usable space for placing said pipes. The condensation or the freezing of the gas circulating inside the pipe when said pipe is subjected to low temperatures is prevented with the pipe of the invention, without negatively affecting said usable space and without adding additional heating conduits or conduits of another type which may collide with the remaining adjacent components.

In the same manner, the pipe is also prevented from deteriorating if it is arranged close to a heat source, preventing the inner section of the conduit from being affected due to direct exposure of said conduit to the heat source. Therefore, the recirculation pipe of the invention is thermally insulated both for cold and for heat. Obtaining a pipe such as that described is also achieved with the method of the invention in a simple and cost-effective manner that does not require special assembly operations.

These and other advantages and features of the invention will become evident in view of the drawings and the detailed description of the invention.

### DESCRIPTION OF THE DRAWINGS

Figure 1 shows a sectional view of an embodiment of the pipe according to the invention.
Figure 2 shows a sectional view of the conduit and the connectors of the ends of the pipe of Figure 1.

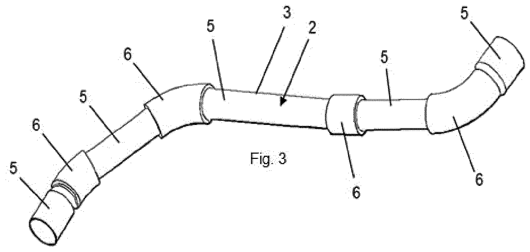

Figure 3 is a perspective view of the conduit of the pipe of Figure 1.

### DETAILED DISCLOSURE OF THE INVENTION

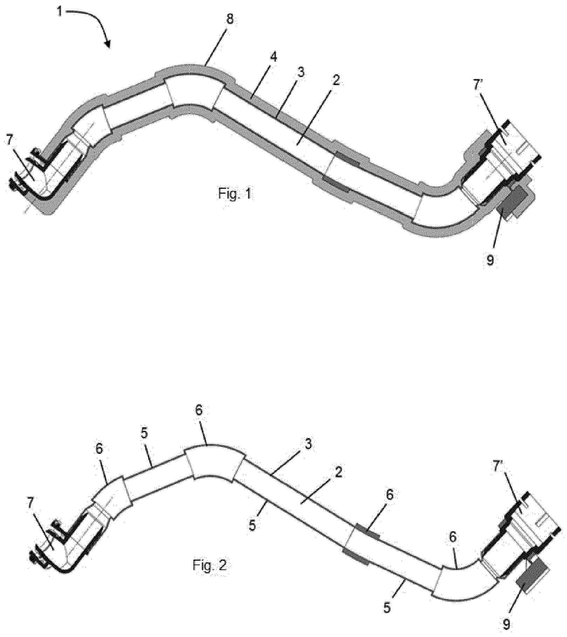

The gas recirculation pipe 1 of a combustion engine according to the embodiment of the invention of Figure 1 comprises a conduit 2 which is suitable for said gas to circulate therein. Said conduit 2 comprises an outer surface 3 that is at least partially covered by an insulating material 4 to thermally insulate said pipe 1. Said insulating material 4 is overmolded on said conduit 2.

In the preferred embodiment of the invention, the conduit 2 is made of plastic, preferably of polyamide although it could also be made of rubber. Said conduit 2 can have straight or curved shapes, or even a combination of both, as can be seen in the example of the drawings. The conduit 2 comprises rigid sections 5 and flexible sections 6 making the conduit 2 act in a non-rigid manner. Said flexible sections 6 could be corrugated sections, for example in the form of an accordion. In the case of a conduit 2 made of rubber or elastomer there would not be rigid sections and flexible sections would not be necessary because the entire length of the conduit would be flexible.

The pipe 1 of the embodiment of Figure 1 also comprises a connector 7 and 7' at each end of the conduit 2 such that the insulating material 4 also at least partially covers the outer geometry of said connectors 7 and 7'. As is shown in Figures 1 and 2, each connector 7 and 7' comprises a notched section which is introduced in the inner diameter of the corresponding end of the conduit 2 such that the connectors 7 and 7' are caught inside the conduit 2. Other manners of coupling and fixing the conduit 2 and the connectors 7 and 7' are also possible, for example threaded areas.

The connectors 7 and 7' of the pipe 1 of the embodiment of the invention allow connecting the pipe 1 to other components. As seen in the example of Figures 1 and 2, said connectors 7 and 7' are not part of the conduit 2, although the possibility of the pipe 1 being connected to adjacent components by other means is not ruled out, such that said connectors 7 and 7' can be dispensed with. One example could be the conduit 2 itself being made of rubber along its entire length, or for it to be provided with coupling means, such as threaded areas or areas made of rubber at the ends such that said means carry out the coupling function of the connectors 7 and 7'.

The pipe 1 of the invention is useful for taking oil vapors and/or fuel vapors, also called blow-by gas, of a motor vehicle where the lack of space for placing components and pipes is evident. Likewise, in Nordic countries where the temperature in the winter can be less than -15ºC, there is a risk that the vapors carried by the pipe 1 condense, negatively affecting engine operation. Therefore, the condensation or the freezing of the gas circulating inside the pipe 1 when said pipe is subjected to low temperatures is prevented with the pipe 1 of the invention, without negatively affecting the usable space in the surrounding area.

The insulating material 4 of the pipe 1 of the preferred embodiment of the invention comprises a foam and/or cellular material comprising a base and a reagent. When said two components are mixed, the mixture tends to swell and expand, said foam and cellular effect being obtained. In a non-limiting example of the invention, the base is polyurethane, although silicone or a similar material could also be used, and the reagent is preferably an isocyanate. The choice of the base and the reagent must be such that upon mixing both products, a material is obtained that comprises air cells therein, which air cells may or may not be communicated with one another, so that said material is suitable for being used as thermal insulation.

Optionally, the insulating material 4 can also comprise a coloring agent such that said material can be of a wide range of colors. Preferably, the insulating material 4 is substantially the same color as connector 2 and/or connectors 7 and 7'.

The insulating material 4 of the preferred embodiment of the invention also comprises a non-porous outer layer 8, which is particularly advantageous for preventing solid particles, such as dust for example, from being deposited on said insulating material 4, or even for preventing the pipe 1 from absorbing oils or other liquids that may be spilled, thus contributing to the pipe 1 remaining clean.

The method for manufacturing the pipe 1 of the invention is very simple. First in an initial step, the conduit 2 together with the connectors 7 and 7' and a sensor 9 is introduced in a mold cavity. Said mold, not depicted in the drawings, preferably comprises two half molds forming said cavity when they are joined to one another.

The base, preferably polyurethane, and the reagent, preferably isocyanate, of the insulating material 4, are mixed in a mixing step.

If the insulating material 4 is desired to be of a specific color, the base of cellular material is premixed with the coloring agent prior to the mixing step, thus giving the insulating material 4 the desired color. Said pre-mixture is mixed with the reagent in the mixing step.

Once the products of the insulating material 4 are mixed together, the mixture is poured into the mold cavity in a filling step, such that the insulating material 4 is overmolded on the conduit 2, and/or on the connectors 7 and 7'. Several techniques can be used in the molding process, such as, for example, manual casting, gravity casting, high- or low-pressure injection, etc.

In the example of Figure 1, where the conduit 2 has been provided with the connectors 7 and 7' in the initial step, the mixture covers the entire outer surface 3 of the conduit 2 and part of the outer surface of the connectors 7 and 7'. It is thus possible to thermally insulate substantially the entire length of the pipe 1, preventing the gas circulating inside the pipe 1 from condensing or freezing both in the conduit 2 and in the connectors 7 and 7' when the pipe 1 is subjected to low temperatures.

The filling step must be carried out before the reaction of the two components ends and the mixture begins to expand, and it can be done before or after closing the mold. When the process is carried out with the mold open, the mixture is poured onto the outer surface 3 of the conduit 2 manually or automatically, and the mold is immediately closed. If in contrast the process is carried out with the mold closed, said mold should be provided with at least one inlet channel to enable filling the mold. In this case, the filling can also be done manually or automatically.

The clearance between the outer surface 3 of the conduit 2 and/or the outer surface of the connectors 7 and 7' and the walls of the mold cavity determine the thickness of the insulating material 4. Therefore, it is very easy to change the thickness of said insulating material 4 by changing the clearance between the mold cavity and the conduit 2. It is thus possible to adjust the thickness of the insulating material 4 to the needs of the pipe 1. Thus, for example, in applications requiring greater thermal insulating capacity, it is enough to increase the clearance between the mold cavity and the conduit 2, and in those applications in which the insulating requirement is not as high and/or there are problems relating to space in the area of usage of the pipe 1, it is enough to reduce said clearance. It is thus possible to prevent the pipe 1 from colliding with adjacent elements.

The mold comprises print areas, not shown in the drawings, serving as support and reference for placing the conduit 2 or the conduit 2 with the connectors 7 and 7'. In the embodiments in which the conduit 2 with the connectors 7 and 7' is introduced in the initial step, the prints are preferably cylindrically-shaped projections which are housed in the inner diameter of the connectors 7 and 7'. It is thus possible to cover the entire geometry of the conduit 2 and the entire geometry of each connector 7 and 7', achieving optimal thermal insulation of the pipe 1. If it is not desirable for the insulating material 4 to cover a specific area, it is enough for the clearance of the mold to be nil in said area. In the example of Figure 1, the insulating material 4 covers the entire length of the conduit 2 and part of each connector 7 and 7', and the end of each connector 7 and 7' intended for being connected to other components is left free. In said example, the insulating material 4 also at least partially covers a sensor 9 arranged in one of the connectors 7'. Said sensor 9 is an electronic component which aids in controlling the gas circulating in the pipe 1. Therefore, the pipe 1 of the embodiment of the invention also allows protecting the sensor 9 and keeping it clean.

Finally, after the curing time in which the base and reagent mixture has expanded and solidified, the pipe 1 is extracted from the mold.

As already discussed, the pipe 1 of the embodiment of the invention can be used for carrying blow-by gas in a car. Due to the lack of space, the components close to the engine are arranged very close to one another, therefore the pipe 1 of the embodiment of the invention can be arranged close to a heat source which may locally deteriorate the conduit 2, for example causing an unwanted reduction of the section due to the softening of the material of the conduit 2, which would affect engine operation if the pipe 1 were not correctly thermally insulated. Therefore, the pipe 1 of the invention protects the pipe 1 and the contents thereof from both low and high temperatures.

As is evident in view of the description and the method of manufacture, the contour of the insulating material 4 reproduces at least part of the outer geometry of the conduit 2. If the pipe 1 comprises the connectors 7 and 7' at the ends, the contour of the insulating material 4 also reproduces at least part of the outer geometry of said connectors 7 and 7'. In the example of Figure 1, the pipe 1 comprises the connectors 7 and 7', each arranged at the corresponding end of the conduit 2, and the insulating material 4 reproduces the entire outer geometry of the conduit 2 and also part of the outer geometry of the connectors 7 and 7'.

## Claims

1. Gas recirculation pipe of a combustion engine comprising a conduit (2) suitable for said gas to circulate therein, said conduit (2) comprising an outer surface (3) and the gas recirculation pipe comprising also a connector (7, 7') at each end of the conduit (2), and an insulating material (4) at least partially covering said outer surface (3) to thermally insulate said pipe (1) and the connectors (7, 7'), the end of each connector (7, 7') intended for being connected to other components being left free, said insulating material (4) being overmolded on said conduit (2), **characterized in that** one of the connectors (7, 7') comprises a sensor (9) to aid in controlling the gas circulating in the pipe (1), which is also at least partially covered by the insulating material (4).

2. Gas recirculation pipe according to claim 1, wherein the insulating material (4) covers the entire geometry of the conduit (2).

3. Gas recirculation pipe according to claim 1 or 2, wherein the insulating material (4) comprises a foam and/or cellular material.

4. Gas recirculation pipe according to claim 3, wherein said insulating material (4) comprises a base and a reagent.

5. Gas recirculation pipe according to claim 4, wherein said base is polyurethane or silicone, preferably polyurethane, and said reagent is preferably an isocyanate.

6. Gas recirculation pipe according to any of claims 1 to 5, wherein the contour of the insulating material (4) reproduces the entire outer geometry of the conduit (2).

7. Gas recirculation pipe according to any of the preceding claims, wherein the insulating material (4) also reproduces at least part of the outer geometry of said connectors (7, 7').

8. Gas recirculation pipe according to any of the preceding claims, wherein the insulating material (4) comprises a non-porous outer layer (8).

9. Gas recirculation pipe according to any of the preceding claims, wherein the insulating material (4) also comprises a coloring agent such that said insulating material (4) can be of different colors, preferably similar to the color of the conduit (2).

10. Method for manufacturing a gas recirculation pipe according to any of claims 4 to 6, **characterized in that** it comprises the following steps:
- an initial step in which the conduit (2) is introduced in a mold cavity with the connectors (7, 7'), one of said connectors (7, 7') comprising a sensor (9),
- a mixing step in which the base and the reagent of the insulating material (4) are mixed,
- a filling step in which the base and the reagent mixture is taken to the mold cavity such that said mixture covers at least part of the outer surface (3) of the conduit (2), the connectors (7, 7'), the end of each connector (7, 7') intended for being connected to other components being left free, and the sensor (9), and
- a curing and extraction step in which the pipe (1) is extracted from the mold after the curing time.

## Patentansprüche

1. Gasrezirkulationsleitung eines Verbrennungsmotors, umfassend eine Leitung (2), die dazu geeignet ist, dass das Gas darin umläuft, wobei die Leitung (2) eine Außenfläche (3) und die Gasrezirkulationsleitung auch ein Verbindungselement (7, 7') an jedem Ende der Leitung (2) und ein Isoliermaterial (4) zur thermischen Isolation der Leitung (1) und der Verbindungselemente (7, 7'), das die Außenfläche (3) mindestens teilweise abdeckt, umfasst, wobei das Ende jedes Verbindungselements (7, 7') zum Anschließen an andere freie Komponenten bestimmt ist, wobei die Leitung (2) mit dem Isoliermaterial (4) umspritzt ist, **dadurch gekennzeichnet, dass** eines der Verbindungselemente (7, 7') einen Sensor (9) zur Unterstützung der Regelung des in der Leitung (1) umlaufenden Gases, das durch das Isoliermaterial (4) mindestens teilweise gedeckt ist, umfasst.

2. Gasrezirkulationsleitung nach Anspruch 1, wobei das Isoliermaterial (4) die ganze Geometrie der Leitung (2) abdeckt.

3. Gasrezirkulationsleitung nach Anspruch 1 oder 2, wobei das Isoliermaterial (4) einen Schaum und/oder ein Zelmaterial umfasst.

4. Gasrezirkulationsleitung nach Anspruch 3, wobei das Isoliermaterial (4) eine Basis und ein Reagenz umfasst.

5. Gasrezirkulationsleitung nach Anspruch 4, wobei die Basis Polyurethan oder Silikon, vorzugsweise Polyurethan, und das Reagenz vorzugsweise ein Isocyanat ist.

6. Gasrezirkulationsleitung nach einem der Ansprüche 1 - 5, wobei die Kontur des Isoliermaterial (4) die ganze äußere Geometrie der Leitung (2) wiedergibt.

7. Gasrezirkulationsleitung nach einem der vorstehenden Ansprüche, wobei das Isoliermaterial (4) auch mindestens einen Teil der äußeren Geometrie der Verbindungselemente (7, 7') wiedergibt.

8. Gasrezirkulationsleitung nach einem der vorstehenden Ansprüche, wobei das Isoliermaterial (4) eine nicht poröse äußere Schicht (8) umfasst.

9. Gasrezirkulationsleitung nach einem der vorstehenden Ansprüche, wobei das Isoliermaterial (4) auch einen Farbstoff umfasst, so dass das Isoliermaterial (4) unterschiedliche Farben, die vorzugsweise der Farbe der Leitung (2) ähnlich sind, aufweisen kann.

10. Verfahren zur Herstellung einer Gasrezirkulationsleitung nach einem der Ansprüche 4-6, **dadurch gekennzeichnet, dass** es die nachfolgenden Schritte umfasst:
- einen ersten Schritt, in dem die Leitung (2) in einen Formhohlraum mit den Verbindungselementen (7, 7') eingeführt wird, wobei eines der Verbindungselemente (7, 7') einen Sensor (9) umfasst;
- einen Schritt des Mischens, in dem die Basis und das Reagenz des Isoliermaterials (4) gemischt werden,
- einen Schritt des Füllens, in dem die Mischung aus Basis und Reagenz in den Formhohlraum gebracht wird, so dass die Mischung mindestens einen Teil der Außenfläche (3) der Leitung (2), der Verbindungselemente (7, 7'), des Endes jedes zum Anschließen an andere freie Komponenten bestimmten Verbindungselements (7, 7') und des Sensors (9) abgedeckt wird, und
- einen Aushärtungs- und Extraktionsschritt, in dem die Leitung (1) nach Ablauf der Aushärtungszeit aus der Form extrahiert wird.

## Revendications

1. Tuyau de recirculation de gaz d'un moteur à combustion comprenant un conduit (2) adapté à la circulation dudit gaz à l'intérieur, ledit conduit (2) comprenant une surface externe (3) et le tuyau de recirculation de gaz comprenant également un raccord (7, 7') à chaque extrémité du conduit (2), et un matériau isolant (4) recouvrant au moins partiellement ladite surface externe (3) afin d'isoler thermiquement ledit tuyau (1) et les raccords (7, 7'), l'extrémité de chaque raccord (7, 7') étant destinée à être reliée à d'autres composants laissés libres, ledit matériau isolant (4) étant surmoulé sur ledit conduit (2), **caractérisé en ce que** l'un des raccords (7, 7') comprend un capteur (9) destiné à faciliter le contrôle du gaz circulant dans le tuyau (1), qui est également au moins partiellement recouvert par le matériau isolant (4).

2. Tuyau de recirculation de gaz selon la revendication 1, dans lequel le matériau isolant (4) recouvre la géométrie entière du conduit (2).

3. Tuyau de recirculation de gaz selon la revendication 1 ou 2, dans lequel le matériau isolant (4) comprend une mousse et/ou un matériau cellulaire.

4. Tuyau de recirculation de gaz selon la revendication 3, dans lequel ledit matériau isolant (4) comprend une base et un réactif.

5. Tuyau de recirculation de gaz selon la revendication 4, dans lequel ladite base est en polyuréthane ou en silicone, de préférence en polyuréthane, et ledit réactif est de préférence un isocyanate.

6. Tuyau de recirculation de gaz selon l'une quelconque des revendications 1 à 5, dans lequel le contour du matériau isolant (4) reproduit l'intégralité de la géométrie externe du conduit (2).

7. Tuyau de recirculation de gaz selon l'une quelconque des revendications précédentes, dans lequel le matériau isolant (4) reproduit également au moins une partie de la géométrie externe desdits raccords (7, 7').

8. Tuyau de recirculation de gaz selon l'une quelconque des revendications précédentes, dans lequel le matériau isolant (4) comprend une couche externe non poreuse (8).

9. Tuyau de recirculation de gaz selon l'une quelconque des revendications précédentes, dans lequel le matériau isolant (4) comprend également un agent colorant de sorte que ledit matériau isolant (4) puisse être de différentes couleurs, de préférence similaires à la couleur du conduit (2).

10. Procédé de fabrication d'un tuyau de recirculation de gaz selon l'une quelconque des revendications 4 à 6, **caractérisé en ce qu'il** comprend les étapes suivantes :
- une étape initiale au cours de laquelle le conduit (2) est introduit dans une cavité de moule comprenant les raccords (7, 7'), l'un desdits raccords (7, 7') comprenant un capteur (9),
- une étape de mélange au cours de laquelle la base et le réactif du matériau isolant (4) sont mélangés,
- une étape de remplissage au cours de laquelle le mélange de base et de réactif est amené vers la cavité de moule de sorte que le mélange recouvre au moins une partie de la surface externe (3) du conduit (2), les raccords (7, 7'), l'extrémité de chaque raccord (7, 7') destinée à être reliée aux autres éléments laissés libres, et le capteur (9), et
- une étape de durcissement et d'extraction au cours de laquelle le tuyau (1) est extrait du moule après le temps de durcissement.
